# DEMANDE DE BREVET EUROPEEN

(11) **EP 0 846 897 A1**
(43) Date de publication de la demande: **10.06.1998**
(21) Numéro de dépôt: 97402946.4
(22) Date de dépôt: 05.12.1997
(51) Int. Cl.: F16H 59/02

(54) **Dispositif de commande impulsionnelle de boîte de vitesses**

(30) Priorité: 06.12.1996 FR 9615008
(71) Demandeur: L.C.D.V., 74300 Cluses (FR)
(72) Inventeur: Rapin, Georges, 74300 Cluses (FR)
(74) Mandataire: Orès, Bernard

(57) **Abrégé**

Dispositif de commande impulsionnelle pour boîte de vitesses automatique, comprenant deux micro-commutateurs (40) à deux états de conduction, actionnés chacun par un poussoir (30) sollicité par un ressort de rappel (32) vers une position de référence du levier de vitesses (16), les combinaisons des états de conduction des micro-commutateurs (40) permettant de caractériser quatre positions possibles du levier de vitesses par rapport à une position de référence.

L'invention s'applique aux commandes impulsionnelles des boîtes de vitesses automatiques pour véhicules automobiles.

## Description

L'invention concerne un dispositif de commande impulsionnelle de boîte de vitesses pour véhicule automobile, du type comprenant des détecteurs associés au levier de vitesses et fournissant des signaux de commande de passage de vitesse correspondant à des déplacements du levier par rapport à une position de référence.

Ces dispositifs sont applicables notamment à la commande des boîtes de vitesses automatiques dans lesquelles le levier peut, depuis une position D (drive ou marche avant), être amené dans une position M de sélection manuelle des vitesses dont on peut l'écarter légèrement dans deux directions opposées pour commander le passage à la vitesse supérieure ou à la vitesse inférieure. Des détecteurs associés au levier dans la position de sélection manuelle fournissent des signaux électriques qui sont appliqués à des moyens réalisant le passage à la vitesse supérieure ou inférieure dans la boîte de vitesses. Lorsque le levier a été ainsi écarté légèrement de la position M et qu'il est relâché par le conducteur, il doit être ramené automatiquement dans la position M par des moyens de rappel.

Les dispositifs connus de ce type ont pour inconvénients d'être relativement coûteux et encombrants, de comprendre un nombre de pièces relativement élevé, d'avoir des tolérances de fabrication et de montage relativement étroites et d'être plus ou moins agréables à utiliser.

L'invention a notamment pour but d'éliminer ces inconvénients de la technique antérieure.

Elle propose à cet effet un dispositif de commande impulsionnelle de boîte de vitesses, comprenant des détecteurs associés au levier de vitesses et fournissant des signaux de commande correspondant à des déplacements du levier par rapport à une position de référence, caractérisé en ce que les détecteurs sont constitués de deux micro-commutateurs ayant chacun deux états possibles de conduction et étant chacun actionnés par un poussoir muni de moyens de rappel, les deux poussoirs étant disposés de part et d'autre de la position de référence et pouvant occuper quatre positions auxquelles correspondent quatre combinaisons des états de conduction des micro-commutateurs, les quatre positions possibles des poussoirs comprenant une première position dans laquelle le levier n'est pas entre les poussoirs et les deux micro-commutateurs sont dans un même premier état de conduction, une deuxième position dans laquelle le levier est dans la position de référence et écarte les deux poussoirs de leur première position, les micro-commutateurs étant alors dans un même deuxième état de conduction, une troisième position dans laquelle le levier déplace l'un des poussoirs à l'encontre de l'action de son moyen de rappel et laisse l'autre poussoir revenir dans sa première position, le micro-commutateur actionné par le premier levier restant dans son deuxième état de conduction tandis que celui associé à l'autre levier est ramené dans son premier état de conduction, et une quatrième position dans laquelle le levier déplace l'autre poussoir à l'encontre de l'action de son moyen de rappel et laisse le premier poussoir revenir dans sa première position, le micro-commutateur actionné par ledit autre poussoir étant alors dans son deuxième état de conduction tandis que celui actionné par le premier poussoir est ramené dans son premier état de conduction.

Le dispositif selon l'invention permet donc de définir quatre positions possibles du levier de vitesses au moyen de deux micro-commutateurs à deux états de conduction.

Il en résulte une réduction du coût et de l'encombrement, une simplification de l'assemblage et une plus grande insensibilité aux tolérances de fabrication et de montage, du fait que, quand le levier de vitesses est déplacé dans une direction de passage à la vitesse supérieure ou inférieure et déplace l'un des poussoirs à l'encontre de l'action de son ressort de rappel, c'est le micro-commutateur actionné par l'autre poussoir qui fournit le signal de commande du passage de vitesse.

Avantageusement, les moyens de rappel des poussoirs sont dimensionnés pour constituer également des moyens de rappel du levier vers sa position de référence.

Ces moyens de rappel peuvent être dimensionnés de façon différente, pour exercer une plus grande force de rappel sur le poussoir qui supporte le poids du levier dans la position de référence.

Dans un mode de réalisation préféré de l'invention, les poussoirs sont guidés en translation et logés dans un boîtier portant les micro-commutateurs précités, les poussoirs étant alignés et montés face à face dans le boîtier tandis que les micro-commutateurs sont montés sur une plaquette support à circuit imprimé qui s'étend entre les logements des poussoirs dans le boîtier.

Dans une première forme de réalisation, les moyens de rappel des poussoirs sont des ressorts.

Dans une variante de réalisation, ils peuvent être du type magnétique et comprendre des aimants permanents.

De façon générale, l'invention permet d'abaisser beaucoup le coût des dispositifs précités, de réduire leur nombre de pièces, de simplifier leur assemblage et d'améliorer leur fiabilité.

L'invention sera mieux comprise et d'autres caractéristiques, détails et avantages de celle-ci apparaîtront plus clairement à la lecture de la description qui suit, faite à titre d'exemple en référence aux dessins annexés dans lesquels :
- la figure 1 représente schématiquement une grille de vitesses pour une boîte de vitesses à commande automatique à laquelle l'invention est applicable ;
- la figure 2 représente le schéma de commande électrique impulsionnelle du dispositif selon l'invention ;
- les figures 3, 4 et 5 sont des vues schématiques en coupe longitudinale d'un dispositif selon l'invention, pour différentes positions du levier de vitesses.

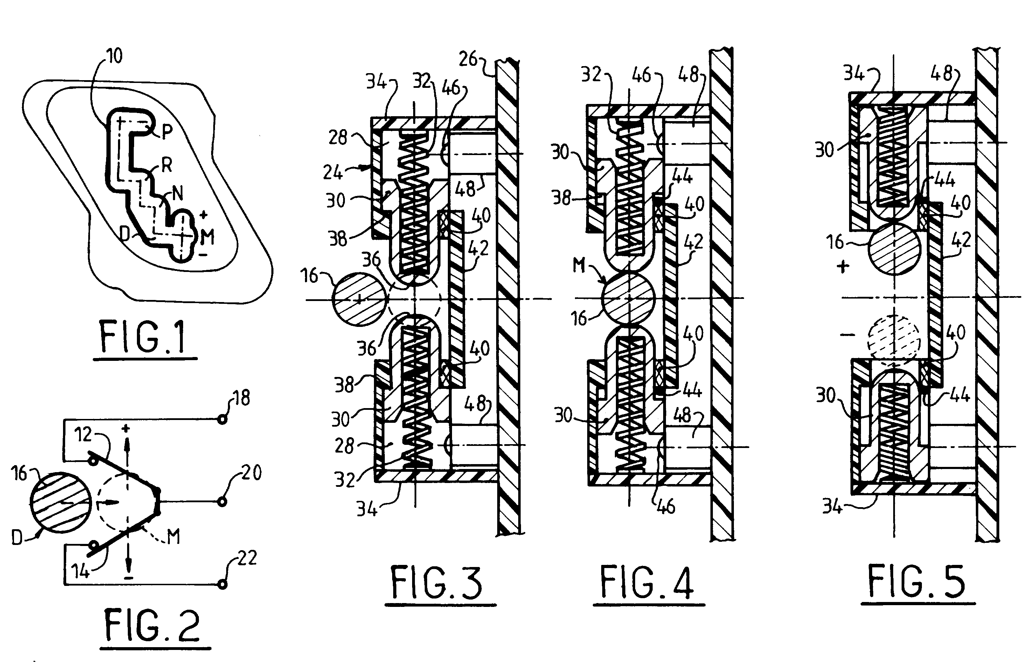

On a représenté schématiquement en figure 1 la grille des vitesses d'une boîte de vitesses à commande automatique. Cette grille 10 dans laquelle on déplace le levier de vitesses, comprend cinq positions P (stationnement), R (marche arrière), N (position neutre ou point mort), D (marche avant) et M (sélection manuelle), le levier de vitesses pouvant être déplacé dans deux directions opposées + et - à partir de la position M pour commander le passage à la vitesse supérieure (position +) et le passage à la vitesse inférieure (position -) en marche avant.

Le levier est relié à des moyens de commande à câble dans les positions P-R-N-D et en est découplé dans la position M, de sorte que ses déplacements dans les positions + et - n'ont pas d'effet sur les moyens de commande à câble.

Pour détecter l'absence et la présence du levier dans la position M, et ses déplacements vers les positions + et -,le dispositif selon l'invention comprend deux commutateurs qui sont représentés schématiquement sous forme d'interrupteurs à lames mobiles 12 et 14 en figure 2 et qui sont fermés quand le levier de vitesses 16 n'est pas dans la position M, et ouverts tous les deux lorsque le levier 16 est dans la position M représentée en traits pointillés en figure 2, le commutateur 12 restant ouvert quand le levier 16 est déplacé dans la position + tandis que le commutateur 14 se ferme sous l'action d'un moyen de rappel non représenté, le commutateur 12 se fermant sous l'action de son moyen de rappel et le commutateur 14 étant ouvert quand le levier 16 est déplacé dans la position -.

Les commutateurs 12 et 14 sont reliés par des conducteurs électriques à trois bornes 18, 20 et 22, la borne 20 étant une borne commune, la borne 18 permettant de détecter l'état ouvert ou fermé du commutateur 12, la borne 22 permettant de détecter l'état ouvert ou fermé du commutateur 14.

En pratique et comme représenté aux figures 3, 4 et 5, le dispositif selon l'invention comprend un boîtier 24 monté sur un support 26 et comportant deux logements cylindriques 28 qui sont orientés face à face de part et d'autre de la position M du levier de vitesses 16 et dans lesquels sont logés deux poussoirs 30 sollicités l'un vers l'autre par des ressorts de rappel 32.

Chaque ressort 32 prend appui par une extrémité sur une paroi de fond 34 du boîtier 24 et par son autre extrémité sur une extrémité correspondante 36 du poussoir 30, le ressort 32 étant en partie logé dans un passage cylindrique axial du poussoir.

Les poussoirs 30 sont orientés et guidés dans les logements 28 parallèlement aux directions de passage à la vitesse supérieure et à la vitesse inférieure (positions + et - des figures 1 et 2), la position + du levier étant par exemple celle représentée en partie supérieure de la figure 5 et la position - étant représentée en traits pointillés en partie inférieure de cette figure.

Chaque poussoir 30 comprend sur sa surface périphérique extérieure un épaulement 38 qui sert de moyen d'actionnement d'un micro-commutateur 40 à deux états possibles de conduction, ces micro-commutateurs 40 étant portés par une plaque support 42 à circuit imprimé qui s'étend entre les extrémités des logements 28 des poussoirs 30, parallèlement au support 26 précité, chaque micro-commutateur 40 comprenant une tige mobile 44 s'étendant parallèlement à l'axe des poussoirs 30 et qui est déplaçable entre une position où elle fait saillie sur le micro-commutateur 40 pour un premier état de conduction de celui-ci et une position où elle est escamotée à l'intérieur du micro-commutateur 40 pour le second état de conduction de celui-ci.

Comme on le voit sur les figures 4 et 5, les tiges 44 sont orientées vers les parois de fond 34 du boîtier 24 et sont rétractées à l'intérieur des micro-commutateurs 40 par les épaulements 38 des poussoirs 30 sollicités par les ressorts 32.

En figure 3, le levier 16 de vitesses est dans la position D ou entre les positions D et M (il ne se trouve pas entre les extrémités 36 des poussoirs 30), les poussoirs 30 sont rapprochés au maximum l'un de l'autre par les ressorts de rappel 32, les épaulements 38 des poussoirs repoussent les tiges 44 à l'intérieur des micro-commutateurs 40 et viennent en butée sur ces micro-commutateurs et sur les parois de fond des logements 28, et les extrémités 36 des poussoirs sont séparées l'une de l'autre d'une distance inférieure au diamètre de la section transversale du levier 16.

Dans cette position, les micro-commutateurs 40 sont dans un même état de conduction qui sera appelé premier état dans ce qui suit.

Lorsque le levier 16 est amené entre l'extrémité 36 des poussoirs 30 (position M représentée en figure 4) il écarte légèrement les poussoirs l'un de l'autre de sorte que les épaulements 38 des poussoirs libèrent les tiges 44 qui font alors saillie sur les commutateurs 40, ces derniers se trouvant tous les deux dans un même deuxième état de conduction.

Si le levier 16 est déplacé dans la position + (partie supérieure de la figure 5), il déplace le poussoir supérieur 30 vers le haut et libère le poussoir inférieur 30 qui peut alors être ramené par son ressort de rappel 32 dans la même position qu'en figure 3, de sorte que le micro-commutateur 40 associé au poussoir supérieur 30 reste dans le second état de conduction tandis que le micro-commutateur 40 associé au poussoir inférieur revient au premier état de conduction.

Inversement, quand le levier 16 est amené dans la position - comme représenté en partie inférieure de la figure 5, c'est le commutateur du poussoir supérieur 30 qui passe dans le premier état de conduction tandis que le micro-commutateur commandé par le poussoir inférieur 40 reste dans le second état de conduction.

Lorsque le levier 16 est déplacé de la position M (figure 4) dans l'une des positions + et - représentées en figure 5 et qu'il est ensuite relâché, il est automatiquement ramené dans la position M par celui des ressorts de rappel 32 qui était comprimé.

Lorsque, comme représenté aux figures 3, 4 et 5, le poids du levier 16 est supporté par le ressort de rappel 32 du poussoir inférieur 30, ce ressort de rappel peut avoir une raideur supérieure à celle du ressort de rappel de l'autre poussoir, de telle sorte que le conducteur du véhicule ait sensiblement le même effort à exercer sur le levier pour le déplacer dans la position + et le déplacer dans la position -.

L'invention prévoit également de disposer des moyens formant point dur sur les trajets des poussoirs 30 dans les logements 28 du boîtier 24, ces moyens comprenant par exemple une bille 46 sollicitée par un ressort (non représenté) et escamotable dans un boîtier 48 monté sur le support 26 et orienté perpendiculairement au poussoir de façon à ce que la bille 46 fasse normalement saillie dans la partie du logement 28 laissée libre par le poussoir 30 quand celui-ci est dans les positions représentées aux figures 3 et 4, la bille 40 étant repoussée à l'intérieur du boîtier 48 par le poussoir 30 lorsque celui-ci est amené dans sa position + (ou -) de la figure 5.

La présence des points durs constitués par les billes 46 permet au conducteur d'avoir une sensation franche de passage dans les positions + et - précitées.

Ces sensations peuvent être réglées en prévoyant des rampes ou analogues sur les surfaces périphériques des poussoirs qui coopèrent avec les billes 46.

En variante, les ressorts de rappel 32 des poussoirs 30 peuvent être remplacés par des aimants permanents portés par les extrémités des logements 28 opposées aux plaques de fond 34 et par les épaulements 38 des poussoirs 30, de telle sorte que les poussoirs soient maintenus par attraction magnétique dans les positions représentées en figure 3.

De façon générale, le dispositif selon l'invention présente les avantages suivants par rapport à la technique antérieure :
- dans la forme de réalisation représentée aux figures 3 à 5, son coût est de 20 % de celui des dispositifs concurrents de la technique antérieure,
- il n'utilise que deux micro-commutateurs,
- il comprend la fonction de rappel du levier de vitesses dans la position M, cette fonction étant assurée par les moyens de rappel des poussoirs actionnant les micro-commutateurs,
- le signal d'amenée du levier de vitesses dans l'une des positions + et - est donné non pas par le micro-commutateur associé au poussoir déplacé vers cette position par le levier, mais par l'autre micro-commutateur, et donc plus rapidement,
- les micro-commutateurs travaillent moins et leur durée de vie est augmentée d'autant,
- le dispositif est très peu sensible à la précision de détermination des positions M, + et - du levier 16, de sorte qu'il peut être fabriqué et assemblé avec de plus grandes tolérances dimensionnelles.

Enfin, le dispositif est facilement adaptable aux desiderata des constructeurs automobiles par modification des courses des poussoirs 30, des raideurs des ressorts de rappel 32 et des caractéristiques des billes à ressort formant les points durs.

## Revendications

1. Dispositif de commande impulsionnelle de boîte de vitesses, comprenant des détecteurs associés au levier de vitesses (16) et fournissant des signaux de commande correspondant à des déplacements du levier par rapport à une position de référence (M), caractérisé en ce que les détecteurs sont constitués de deux micro-commutateurs (40) ayant chacun deux états possibles de conduction et étant chacun actionné par un poussoir (30) muni de moyens de rappel (32), les deux poussoirs étant disposés de part et d'autre de la position de référence (M) et pouvant occuper quatre positions auxquelles correspondent quatre combinaisons différentes des états de conduction des micro-commutateurs, les quatre positions possibles des poussoirs (30) comprenant une première position dans laquelle le levier (16) n'est pas entre les poussoirs (30) et les deux micro-commutateurs (40) sont dans un même premier état de conduction, une deuxième position dans laquelle le levier (16) est dans la position de référence (M) et écarte les deux poussoirs (30) de leur première position, les micro-commutateurs (40) étant dans un même deuxième état de conduction, une troisième position dans laquelle le levier (16) déplace l'un des poussoirs (30) à l'encontre de l'action de son moyen de rappel (32) en laissant l'autre poussoir revenir dans sa première position, le micro-commutateur (40) actionné par le premier poussoir restant dans son deuxième état de conduction tandis que celui associé à l'autre poussoir est ramené dans son premier état de conduction, et une quatrième position dans laquelle le levier (16) déplace l'autre poussoir (30) à l'encontre de l'action de son moyen de rappel (32) en laissant le premier poussoir revenir dans sa première position, le micro-commutateur (40) actionné par ledit autre poussoir étant alors dans son deuxième état de conduction tandis que celui actionné par le premier poussoir est dans son premier état de conduction.

2. Dispositif selon la revendication 1, caractérisé en ce que les poussoirs (30) sont guidés en translation et logés dans un boîtier (24) portant les micro-commutateurs.

3. Dispositif selon la revendication 2, caractérisé en ce que les poussoirs (30) sont alignés et montés face à face dans le boîtier (24).

4. Dispositif selon la revendication 2 ou 3, caractérisé en ce que les micro-commutateurs (40) sont montés sur une plaquette support (42) à circuit imprimé qui s'étend entre les logements (28) des poussoirs (30).

5. Dispositif selon l'une des revendications précédentes, caractérisé en ce que les moyens de rappel des poussoirs (30) sont dimensionnés pour constituer des moyens de rappel du levier (16) vers sa position de référence (M).

6. Dispositif selon la revendication 5, caractérisé en ce que les moyens de rappel des poussoirs (30) sont dimensionnés de façon différente, pour exercer une plus grande force de rappel sur le poussoir qui supporte le poids du levier (16) dans la position de référence (M).

7. Dispositif selon l'une des revendications précédentes, caractérisé en ce que les moyens de rappel des poussoirs sont du type magnétique et comprennent des aimants permanents tendant à maintenir les poussoirs dans leur première position.

8. Dispositif selon l'une des revendications 1 à 6, caractérisé en ce que les moyens de rappel des poussoirs (30) sont des ressorts (32) sollicitant les poussoirs vers leur première position.

9. Dispositif selon la revendication 8, caractérisé en ce que des moyens formant point dur, tels que des billes (46) chargées par des ressorts, sont agencés sur la course des poussoirs (30) dans le boîtier (24).

10. Dispositif selon l'une des revendications précédentes, caractérisé en ce que les micro-commutateurs (40) comprennent une tige mobile (44) actionnable par un poussoir (30) précité entre une position en saillie sur le micro-commutateur et une position rétractée à l'intérieur du micro-commutateur.
